Europäisches Patentamt

European Patent Office

Office européen des brevets

(11) Veröffentlichungsnummer: **0 516 067 A2**

## EUROPÄISCHE PATENTANMELDUNG

(21) Anmeldenummer: **92108906.6**

(22) Anmeldetag: **27.05.92**

(51) Int. Cl.5: **F24J  2/26**, F24J 2/40, F24J 2/46, F24D 19/10

(30) Priorität: **29.05.91 DE 4117650**
**29.05.91 DE 4117651**
**29.05.91 DE 4117652**
**29.05.91 DE 4117653**

(43) Veröffentlichungstag der Anmeldung:
**02.12.92 Patentblatt  92/49**

(84) Benannte Vertragsstaaten:
**AT BE CH DE DK ES FR GB GR IT LI NL PT SE**

(71) Anmelder: **C.I.V. CAPITAL UND IMMOBILIEN BERATUNGS- UND VERMITTLUNGS GmbH**
Uhlstrasse 118
W-5040 Brühl(DE)

(72) Erfinder: **Jünemann, André**
**Pfefferacker Strasse 7**
**W-4670 Gelsenkirchen-Buer(DE)**

(74) Vertreter: **Hennicke, Albrecht, Dipl.-Ing.**
**Patentanwälte Dipl.-Ing. Buschhoff Dipl.-Ing. Hennicke Dipl.-Ing. Vollbach**
**Kaiser-Wilhelm-Ring 24 Postfach 190 408**
**W-5000 Köln 1(DE)**

(54) **Solaranlage und Verfahren zu ihrem Betrieb.**

(57) Solaranlage und Verfahren zu ihrem Betrieb, wobei es möglich ist, konzentrierende Sonnenkollektoren (11) mit normalerweise evakuierten Kollektorgehäusen (15) zu belüften und in diesen Kollektorgehäusen (15) einen Luftstrom zu erzeugen, um bei einer örtlich auftretenden Überhitzung die Sonnenkollektoren (11) und den sie durchströmenden Wärmeträger (46) zu kühlen und Schäden zu verhindern, wobei ein einfacher Aufbau und eine druckdichte Verbindung der Kollektoren untereinander angestrebt wird.

FIG.8

EP 0 516 067 A2

Die Erfindung betrifft eine Solaranlage mit mindestens einem Wärmespeicher und einem Feld konzentrierender Sonnenkollektoren, deren ihre Absorberrohre umschließenden Innenräume miteinander verbunden und an einen Unterdruckerzeuger angeschlossen sind. Die Erfindung hat auch ein Verfahren zum Betrieb einer solchen Solaranlage zum Gegenstand.

Solaranlagen sollen über das ganze Jahr hinweg bei heiterem und bei bedecktem Himmel die Sonnenstrahlung einfangen und nutzbar machen. Es ist deshalb notwendig, die Sonnenkollektoren so aufzustellen und anzuordnen, daß ihre Aufnahmefähigkeit für Strahlungswärme von morgens bis abends das ganze Jahr über möglichst ein Optimum erreicht und daß bei der Aufnahme und beim Weitertransport der Wärme möglichst geringe Verluste auftreten. Hierzu ist vor allem eine sehr gute Isolierung der Leitungen, aber auch der Gehäuse und Tragvorrichtungen erforderlich, in denen die Kollektoren untergebracht sind.

Werden konzentrierende Sonnenkollektoren verwendet, so bestehen diese aus einem den Wärmeträger führenden Absorberrohr und einem dieses im Abstand umgebenden Glasrohr, welches auf der der Sonne zugewandten Seite eine strahlendurchlässige Abdeckung bildet und deren der Sonne gegenüberliegende, unter dem Absorberrohr befindliche Innenfläche verspiegelt ist und die auf diese Fläche auftreffenden Sonnenstrahlen auf das Absorberrohr lenkt. Der Zwischenraum zwischen dem Absorberrohr und dem Abdeckrohr ist evakuiert, um Wärmeverluste zu vermeiden, die von der Luft hervorgerufen werden, die sich im Inneren der Kollektoren befindet (DE-A-28 38 076).

Aufgrund der Konstruktion und guten Isolierung konzentrierender Kollektoren können bei klarem Himmel im Sommer im Kollektorfeld sehr hohe Temperaturen auftreten, die sehr hohe Wärmespannungen erzeugen und besondere konstruktive Maßnahmen erfordern. Hierbei macht insbesondere die vakuumdichte Abdichtung der Kollektor-Abdeckrohre gegenüber dem Gehäuse und gegenüber den Absorberrohren Schwierigkeiten.

Es ist eine Solaranlage bekannt (US-A-3 916 871), bei der mehrere Absorberrohre durch wärmeleitende Platten miteinander verbunden und in einem Modulgehäuse angeordnet sind, das eine lichtdurchlässige Abdeckung hat und evakuiert ist, um Wärmeverluste durch Wärmeableitung zu verhindern. Mehrere Modulgehäuse sind durch Faltenbälge miteinander verbunden, die an die Enden der Verbindungsöffnungen der Modulgehäuse angeschlossen sind. Derartige Faltenbälge ermöglichen zwar eine Bewegung der Moduln gegeneinander, wenn diese sich bei Erwärmung ausdehnen, sie werden aber beim Erzeugen eines Unterdruckes im Inneren der Modulgehäuse infolge des von außen auf sie einwirkenden Druckes stark verformt und unterliegen einem hohen Verschleiß. Außerdem werden die Anschlußstellen bei Bewegung der Moduln gegeneinander hoch beansprucht und die Faltenbälge können an den Anschlußstellen leicht abreißen.

Es ist auch bereits bekannt, die Modulgehäuse für Sonnenkollektoren zu belüften, um dort einen Wärmestau abzubauen (DE-A-27 12 192). Hierdurch wird jedoch die Leistung der Sonnenkollektoren nicht beeinflußt, die bei starker Sonneneinstrahlung dem durch die Absorberrohre strömenden Wärmeträger ungehindert weiter Wärme zuführen.

Aufgabe der Erfindung ist es, eine Solaranlage der eingangs näher erläuterten Art so auszubilden, daß die Temperaturen des Wärmeträgers in den einzelnen Kollektoren des Kollektorfeldes mindestens auf der Vorlaufseite nur geringe Unterschiede aufweisen und durch eine einfache Sicherheitsvorrichtung Schäden vermieden werden, die durch Überschreiten einer vorgegebenen Höchsttemperatur in den Kollektoren auftreten können.

Diese Aufgabe wird bei einer Solaranlage nach der Erfindung dadurch gelöst, daß die Innenräume der Kollektoren einzeln oder in Gruppen an eine mit dem Unterdruckerzeuger verbundene Be- und Entlüftungseinrichtung mit Absperrorganen angeschlossen sind, die von einer Überwachungseinrichtung betätigt werden, die in Abhängigkeit von der Temperatur des Wärmeträgers in den Kollektoren und/oder im Speicher gesteuert wird.

Diese Ausgestaltung hat den Vorteil, daß beim Überschreiten einer höchstzulässigen Temperatur in den Kollektoren eines Moduls im Kollektorfeld das Vakuum in den Kollektoren abgebaut und hierdurch die Isolierung beseitigt wird. Die in den Kollektoren vorhandene Luft beseitigt dann einen Teil der eingestrahlten Wärme, indem sie diese durch Wärmeleitung und Konvektion an die Umgebung abführt. Die Beseitigung des Vakuums hat also einen Kühleffekt, der einer Überhitzung der Kollektoren und hierdurch auftretenden Spannungsspitzen entgegenwirkt.

Durch den Einbau einer Be- und Entlüftungseinrichtung mit angeschlossenem Unterdruckerzeuger ist es möglich, die Solaranlage mit Vakuum in den Kollektoren zu betreiben und hierdurch bei geringsten Wärmeverlusten die größtmögliche Strahlungsenergieausbeute zu erreichen, es ist aber auch möglich, die Solaranlage nach der Erfindung dadurch mit einer geringeren Leistungsstufe zu betreiben, daß der Unterdruck in allen Kollektoren und Verbindungsrohren beseitigt wird. Die Bauart der Kollektoren ändert sich hierdurch nicht, sondern es ist lediglich notwendig, an den einzelnen Kollektoren oder an jedem einzelnen Modul mit mehreren Kollektoren Absperrorgane vorzusehen, die es ermöglichen, das in den Kollektoren erzeugte Vakuum aufrechtzuerhalten oder dadurch zu beseitigen, daß Luft oder ein anderes Gas in die Kollektoren eintreten kann.

Die erwünschte Kühlwirkung im Überhitzungsfalle kann dadurch noch gesteigert werden, daß im Inneren der Kollektoren und in den Verbindungsrohren ein Luftstrom erzeugt wird und eine Wärmeabführung durch Konvektion erfolgt.

Eine weitere Kühlungsmöglichkeit bei Überhitzung des Kollektorfeldes oder einzelner Kollektoren in diesem Kollektorfeld besteht darin, daß bei Überschreiten der höchstzulässigen Temperatur in einem Kollektormodul der Wärmespeicherkreislauf zugeschaltet wird, soweit die Wärmeträgertemperatur hier niedriger ist als in den Kollektormoduln. Ferner ist es möglich, bei Überschreiten der höchstzulässigen Temperatur im Beharrungszustand oder Stillstand eines Moduls des Kollektorfeldes die Strömungsgeschwindigkeit des Wärmeträgers im Solarkreislauf zu erhöhen und/oder den Wärmespeicherkreislauf zuzuschalten, soweit die Temperatur des Wärmeträgers hier niedriger ist. Durch Erhöhung der Fließgeschwindigkeit des Wärmeträgers hat dieser kaum noch die Möglichkeit, Strahlungswärme in den Kollektoren aufzunehmen und gegebenenfalls in die Wärmespeicher weiterzuleiten.

Wenn mehrere Wärmespeicher vorgesehen sind, die an einen Verbraucherkreislauf angeschlossen und wahlweise in den Wärmespeicherkreislauf einschaltbar sind, ist es möglich, den Wärmeträger durch alle Wärmespeicher zu leiten, so daß der Wärmeträger seinen Wärmeinhalt auch an diejenigen Wärmespeicher abgeben kann, die noch wärmeaufnahmefähig sind.

Es ist zweckmäßig, jeweils mehrere Kollektoren zu einem Modul zusammenzufassen. Jeder Modul wird dann mit einem Thermofühler versehen und einzeln an die Be- und Entlüftungseinrichtung angeschlossen. Diese Ausgestaltung hat den Vorteil, daß gezielt nur derjenige Modul belüftet und hierdurch gekühlt werden kann, in dem eine Überhitzung auftritt.

Im Betrieb von Solaranlagen hat sich gezeigt, daß die Vorlauftemperaturen unterschiedlich sind, mit denen der Wärmeträger die einzelnen Kollektoren oder Kollektormoduln eines größeren Kollektorfeldes verläßt. Werden diese Vorlaufströme an verschiedenen Stellen in eine Vorlaufsammelleitung geführt, vermischen sie sich dort nicht, sondern erreichen mit ihren unterschiedlichen Temperaturen nacheinander den Temperaturfühler für die Solarvorlauftemperatur, der am Ende der Vorlaufsammelleitung angeordnet ist.

Um eine präzise Steuerung der Solaranlage zu erreichen, ist es deshalb zweckmäßig, wenn parallelgeschaltete Kollektoren oder Kollektorgruppen oder -moduln des Kollektorfeldes jeweils eine eigene Solarvorlaufleitung haben und an der gleichen Mündungsstelle in die Solarvorlauf-Sammelleitung münden, in der der Temperaturfühler für die Solarvorlauftemperatur des ganzen Kollektorfeldes angeordnet ist.

Um eine vollständige Vermischung aller Vorlaufströme zu erreichen, bevor der Solarvorlauf den Temperaturfühler für die Solarvorlauftemperatur erreicht, ist es zweckmäßig, wenn die Mündungsstelle aller Solarvorlaufleitungen in der Mischkammer eines Mischkopfes angeordnet ist, in dem die einzelnen Solarvorlaufströme verwirbelt und vermischt werden und an den die Solarvorlauf-Sammelleitung angeschlossen ist. Zu diesem Zweck kann der Mischkopf für jede angeschlossene Solarvorlaufleitung einen Einlaufstutzen aufweisen, wobei die Einlaufstutzen der Solarvorlaufleitungen über einen Halbkreis verteilt mit gleichem Winkelabstand angeordnet sind und ihre Achsen sich in einem Punkte schneiden, der auf der Mittelachse eines Einlaufstutzens stromauf des Temperaturmeßfühlers für die Solarvorlauftemperatur angeordnet ist.

Besonders zweckmäßig ist es, wenn mindestens je ein Solarkreislauf und ein Wärmespeicherkreislauf vorgesehen sind, von denen jeder eine eigene Umwälzpumpe aufweist und deren Vorlaufleitungen und deren Rücklaufleitungen durch Dreiwegeventile verbunden sind, die von der Steuereinrichtung gesteuert werden. Dies hat den Vorteil, daß nur eine kleine Solarumlaufpumpe erforderlich ist, wenn der Wärmeträger nach seinem Durchlauf durch das Kollektorfeld sogleich wieder in dieses zurückgeführt werden soll, um den Wärmeinhalt des Wärmeträgers und seine Temperatur zu erhöhen. Die Speicherumwälzpumpe, die den Wärmeträger durch die Wärmespeicher drückt und eine größere Leistung haben muß, braucht so nur dann eingesetzt zu werden, wenn bei einer genügend hohen Temperaturdifferenz Wärme an den zu ladenden Wärmespeicher abgegeben werden kann.

Um eine möglichst gleichmäßige Wärmeaufnahme von allen Kollektoren eines Moduls zu erreichen, sollen die Gehäuse der einzelnen Kollektoren eines Moduls im wesentlichen von langgestreckten Röhren aus Glas oder, mindestens im Bereich ihrer Abdeckung, aus glasklarem Kunststoff gebildet werden und in der Höhe versetzt nebeneinander angeordnet sein. Hierbei kann die Anordnung so getroffen werden, daß die Kollektoren mit ihren Längsachsen in zwei Ebenen angeordnet sind, die unter einem flachen Winkel von ca. 10° gegeneinander geneigt sind. Besonders zweckmäßig ist es jedoch, wenn die nebeneinanderliegenden Kollektoren eines Moduls derart in der Höhe gegeneinander versetzt sind, daß ihre Längsachsen Erzeugende eines parabolischen Teilzylinders sind. Die Kollektoren eines Moduls liegen dann nicht in einer der Sonne zugewandten Ebene, sondern in einer parabolischen Zylinderfläche. Hierdurch wird dem Sonnenlauf während eines Tages Rechnung getragen und ein streifender Lichteinfall am frühen Morgen und späten Abend bei ortsfester Montage der Kollektormoduln günstiger aufgenommen.

Um eine einfache und kostensparende Montage der Kollektoren zu erreichen, die auch ein leichtes Auswechseln einzelner Kollektoren eines Moduls ermöglicht, sind die Kollektoren eines Moduls untereinander und mit sie an ihren Enden verbindenden Verbindungsrohren durch druckdichte Verschraubungen verbunden. Hierbei kann jede Verschraubung für eine Kollektorröhre einen Muffenteil mit Innengewinde und einen Hülsenteil mit Außengewinde und einen Elastomer-Dichtring aufweisen, wobei der Innenumfang von Hülsenteil und Dichtring dem Außenumfang der Kollektorröhre angepaßt ist. Derartige Verschraubungen ermöglichen eine vakuumdichte Verbindung einzelner, aus Glas bestehender Kollektorgehäuse untereinander und mit den kopfseitigen Verbindungsrohren im Modul. Wenn die Dicke des Dichtringes mindestens auf einem Teil seiner Länge der Breite des Ringspaltes zwischen dem Innenumfang des Muffenteiles und dem Außenumfang der Kollektorröhre entspricht und wenn der Dichtring nur mit einem Teil seiner Länge das Ende der Kollektorröhre umfaßt, hat diese die Möglichkeit, sich bei Temperaturänderungen in Längsrichtung und in Umfangsrichtung auszudehnen und zusammenzuziehen. Bei radialer Ausdehnung der Glasröhre kann der hierdurch in Radialrichtung zusammengedrückte Dichtungsring aus Elastomer in den verbleibenden Raum vor dem Stirnrand der Glasröhre ausweichen, so daß der infolge Temperaturdehnung in Radialrichtung auftretende Druck abgebaut wird.

Wenn der Hülsenteil der Schraubverbindung an seinem freien Ende auf dem Innenumfang eine umlaufende Nute und einen darin angeordneten O-Ring aus Elastomer aufweist, wird das Eindringen von Verunreinigungen oder Fremdkörpern in den Zwischenraum zwischen der Glasröhre des Kollektors und dem Schraubring verhindert.

Die Verwendung von Schraubverbindungen der oben näher erläuterten Art ermöglicht es auch, mehrere in ihrer Längsrichtung hintereinander angeordnete und durch Muffen miteinander verbundene Kollektoren zu einem Polygonzug zusammenzufassen, der einer gekrümmten Linie, insbesondere einem Kreisbogen folgt. Mehrere, hintereinander angeordnete Kollektoren können sich dann auch gekrümmten Trägerflächen, beispielsweise einer gebogenen Wand, anpassen oder sie können im Modul in Längsrichtung längs eines Polygonzuges verlaufen und hierdurch dem im Laufe des Tages sich ändernden Azimutwinkel der Sonne Rechnung tragen, indem jeweils die Längsachse mindestens eines Kollektors einer Reihe von mehreren hintereinander angeordneten Kollektoren zu den Strahlen der einfallenden Sonne senkrecht verläuft.

Weitere Merkmale und Vorteile der Erfindung ergeben sich aus der nachfolgenden Beschreibung und den Zeichnungen, in denen eine bevorzugte Ausführungsform der Erfindung an einem Beispiel näher erläutert ist. Es zeigt:

Fig. 1 eine Solaranlage nach der Erfindung in einer schematischen Darstellung,

Fig. 2 eine Einzelheit der Fig. 1, die einen Kollektormodul des Kollektorfeldes in einer Draufsicht und teilweise im Horizontalschnitt zeigt, in vergrößerter Darstellung,

Fig. 3 den Gegenstand der Fig. 2 in einem schematischen Querschnitt in verkleinerter Darstellung in einer ersten Ausführungsform,

Fig. 4 eine der Fig. 3 entsprechende Darstellung in einer zweiten Ausführungsform,

Fig. 5 eine Einzelheit V der Fig. 2 in vergrößerter Darstellung,

Fig. 6 eine Muffenverbindung von zwei hintereinander geschalteten Sonnenkollektoren in einer Seitenansicht und teilweise im Diametralschnitt, wobei die Absorberrohre und ihre Abstützung fortgelassen sind,

Fig. 7 den Mischkopf der Solarvorlaufleitungen in der Solaranlage nach Fig. 1 in einem Längsschnitt in vergrößerter Darstellung und

Fig. 8 die Be- und Entlüftungseinrichtung für die Sonnenkollektoren, schematisch dargestellt für einen Kollektormodul mit einer in einem strichierten Kasten dargestellten Variante.

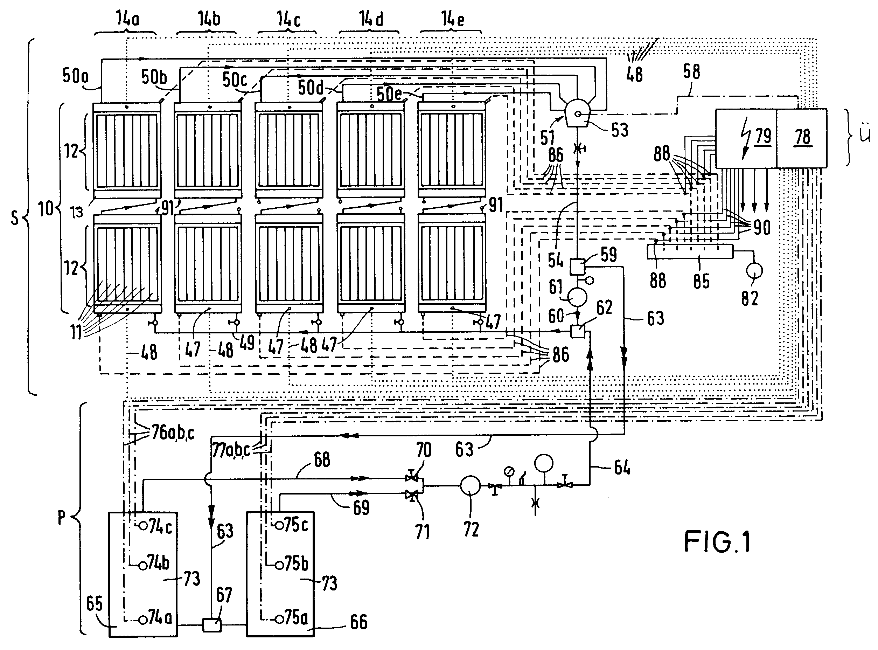

Die in Fig. 1 dargestellte Solaranlage nach der Erfindung besteht zu einem wesentlichen Teil aus einem Feld 10 konzentrierender Sonnenkollektoren 11, von denen jeweils sieben zu einem Kollektormodul 12 zusammengefaßt und in einem Modulgehäuse 13 untergebracht sind. Bei der dargestellten Ausführungsform sind 10 Kollektormoduln 12 jeweils paarweise nebeneinander angeordnet und bilden fünf Kollektorbatterien 14a, 14b, 14c, 14d und 14e.

Das Kollektorfeld 10 kann in einer nach Süden gerichteten Dachfläche eines Hauses, an einer senkrechten oder geneigten Gebäudewand oder auch auf einem Traggestell im Freien derart angeordnet sein, daß es nicht beschattet wird. Hierbei wird der Neigungswinkel der Kollektoren gegen die Horizontale zweckmäßig so gewählt, daß der Einfallswinkel der Sonnenstrahlen bei höchstem Sonnenstand kleiner als 20° ist.

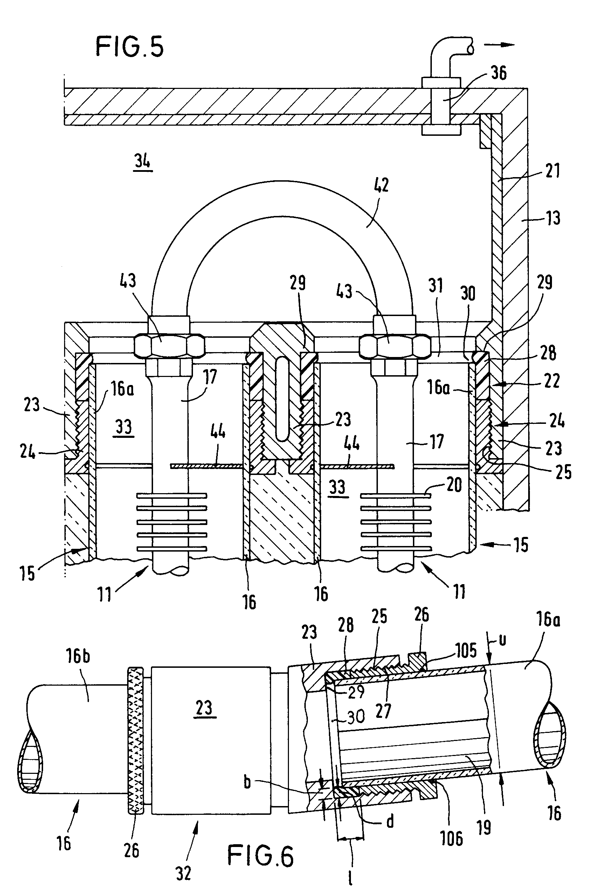

Die bei der Solaranlage nach der Erfindung verwendeten Sonnenkollektoren 11 haben ein langgestrecktes Kollektorgehäuse 15, das von einer zylindrischen Glasröhre 16 gebildet wird, die ein zentrisch im Kollektorgehäuse 15 angeordnetes Absorberrohr 17 umgibt. Die zylindrische Glasröhre 16 ist in ihrem unteren, der Sonne zugewandten Abdeckung 18 gegenüberliegenden Teil mit einer Verspiegelung 19 versehen, welche die auftreffenden Sonnenstrahlen reflektiert und auf das Absorberrohr 17 lenkt (Fig. 6).

Das Absorberrohr 17 besteht zweckmäßig aus Kupfer und hat eine schwarze Oberfläche. Es ist außerdem mit Lamellen 20 versehen, welche seine Strahlenaufnahmefläche vergrößern und Wärmeaufnahmefähigkeit verbessern (Fig. 5).

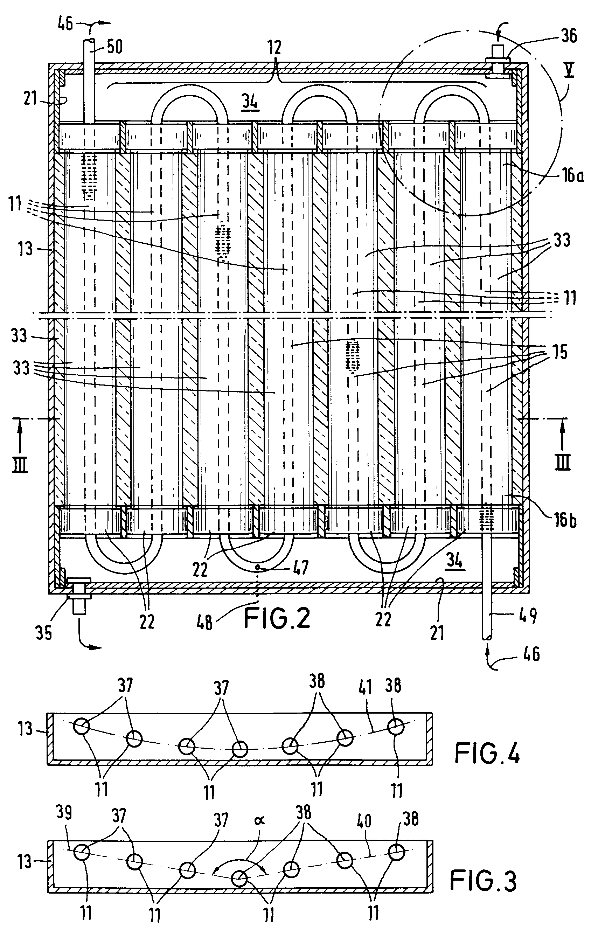

Wie bereits oben erwähnt, sind mehrere Sonnenkollektoren 11 zu einem Kollektormodul zusammengefaßt. Zu diesem Zwecke sind bei der in Fig. 2 dargestellten Ausführungsform sieben Kollektoren 11 an ihren Enden durch Verbindungsrohre 21 miteinander verbunden. Diese Verbindungsrohre 21 haben einen im wesentlichen rechteckigen Querschnitt und sind an einer Längsseite mit je sieben Anschlußmuffen 22 für die Kollektorgehäuse 15 der einzelnen Sonnenkollektoren 11 versehen. Hierbei sind bei der dargestellten Ausführungsform die Anschlußmuffen 22 in die eine Seitenwand des Verbindungsrohres 21 integriert, wobei ihre Muffenteile 23 ins Innere des Modulgehäuses 13 hineinragen, in dem die Glasröhren 16 der Sonnenkollektoren 11 parallel nebeneinander angeordnet und an ihren Enden 16a und 16b durch druckdichte Verschraubungen 24 mit den Verbindungsrohren 21 verbunden sind. Zu dieser Verschraubung 24 gehört einerseits der Muffenteil 23 mit Innengewinde 25 und andererseits ein Hülsenteil 26 mit Außengewinde 27, der das Ende 16a bzw. 16b der Glasröhre umschließt und in den Muffenteil 23 des Verbindungsrohres 21 eingeschraubt wird. Der Hülsenteil 26 drückt hierbei auf einen Elastomer-Dichtring 28 von rechteckigem Querschnitt, dessen Innenumfang ebenso wie der Innenumfang des Hülsenteiles 26 dem Außenumfang der Kollektorröhre angepaßt ist und der den Ringspalt zwischen Kollektorröhre 16 und Muffenteil 23 ausfüllt. Beim Einschrauben des Hülsenteiles 26 in den Muffenteil 23 wird der Elastomer-Dichtring 28 axial gestaucht. Er wird hierbei gezwungen, sich radial auszudehnen und stellt eine druckdichte Verbindung zwischen dem Außenumfang der zylindrischen Glasröhre 16 des Kollektorgehäuses 15 einerseits und der Innenwandung des Muffenteiles 23 des Verbindungsrohres 21 her. Damit hierbei auf die zylindrische Glasröhre 16 des Sonnenkollektors kein unzulässig hoher Druck in Radialrichtung ausgeübt werden kann, endet die zylindrische Glasröhre 16 in geringem Abstand vor der Schulter 29 des Muffenteiles 23, an der der Elastomer-Dichtring 28 anliegt. Der Elastomer-Dichtring 28 kann dann an seinem an der Schulter 29 anliegenden Ende ein wenig radial nach innen in den Spalt 30 ausweichen, der zwischen der Stirnfläche 31 des Endes 16a bzw. 16b der zylindrischen Glasröhre 16 des Kollektorgehäuses 15 und der Schulter 29 des Muffenteiles 23 des Verbindungsrohres 21 verbleibt.

Wie aus Fig. 6 hervorgeht, kann eine gleichartig ausgebildete druckdichte Verbindung auch zwischen zwei in Längsrichtung aneinander anschließenden Kollektoren hergestellt werden. Die hier dargestellte Längsverbindungsmuffe 32 hat für jedes der miteinander zu verbindenden Kollektorenden 16a und 16b einen Muffenteil 23 mit Innengewinde 25, in das ein mit Außengewinde 27 versehener Hülsenteil 26 eingeschraubt wird, der axial auf einen Elastomer-Dichtring 28 drückt. Die Dicke d des Dichtringes 28 entspricht der Breite b des Ringspaltes zwischen dem Innenumfang des Muffenteiles 23 und dem Außenumfang U der Kollektorröhre 16 und der Dichtring 28 umfaßt nur mit einem Teil seiner Länge 1 das Ende 16a der Kollektorröhre 16. Ein O-Ring 106, der in einer umlaufenden Nute 105 im Hülsenteil 26 angeordnet ist, verhindert das Eindringen von Verunreinigungen in den Zwischenraum zwischen Kollektoraußenwand und Hülsenteil.

Die Sonnenkollektoren 11 sind im Modulgehäuse in einer geeigneten Isoliermasse 33 eingebettet, die aus Schaumkunststoff, Mineralwolle oder einem anderen geeigneten Material bestehen kann, die Kollektorgehäuse jedoch nur in ihrem unteren, verspiegelten Teil umgibt, der keine Sonnenstrahlen einlassen soll. Desgleichen können auch die Verbindungsrohre 21 im Modulgehäuse mit einer geeigneten Isolierung umgeben sein, obgleich dies in der Zeichnung nicht dargestellt ist.

Man erkennt, daß die Kollektorgehäuse 15 an ihren Enden 16a und 16b vollständig offen sind und die Innenräume 33 der Sonnenkollektoren über die Innenräume 34 der Verbindungsrohre 21 alle miteinander in Verbindung stehen. Diese so miteinander verbundenen Innenräume eines jeden Kollektormoduls 12 haben Anschlußstutzen 35 für eine Entlüftungsleitung und Anschlußstutzen 36 für eine Belüftungsleitung, die jeweils in einander gegenüberliegenden Verbindungsrohren 21 eines jeden Moduls 12 angeordnet sind und deren Zweck weiter unten noch erläutert werden wird.

In den Fig. 3 und 4 ist schematisch dargestellt, wie die sieben Kollektoren eines Moduls im Modulgehäuse 13 angeordnet sind. Bei der in Fig. 3 dargestellten Ausführungsform sind die Längsachsen 37 und 38 der Kollektoren 11 in zwei Ebenen 39 und 40 angeordnet, die unter einem stumpfen Winkel $\alpha \simeq 170°$ gegeneinander geneigt sind und wobei die Achse des in der Mitte liegenden Kollektors 11 beiden Ebenen angehört. Bei der in Fig. 4 dargestellten Ausführungsform sind die nebeneinander liegenden Kollektoren des Moduls derart in der Höhe gegeneinander versetzt, daß ihre Längsachsen 37 und 38 Erzeugende eines parabolischen Teilzylinders 41 sind.

Während die Innenräume 33 der Sonnenkollektoren 11 durch die Innenräume 34 der Verbindungsrohre 21 miteinander verbunden sind, sind die Absorberrohre 17 der Sonnenkollektoren durch Rohrkrümmer 42 miteinander verbunden, die sich in den Innenräumen 34 der Verbindungsrohre 21 befinden und durch druckdichte Rohrverschraubungen 43 an die Absorberrohre 17 angeschlossen sind (Fig. 5). Die Absorberrohre 17 sind an ihren Enden mit Stützvorrichtungen 44 in den zylindrischen Glasröhren 16 der Kollektoren 11 so abgestützt, daß sie im Zentrum der Kollektorgehäuse 15 gehalten werden, sich in diesen aber axial bewegen können, wenn sie sich unter Wärmeeinwirkung verlängern bzw. verkürzen. Die Absorberrohre der nebeneinander angeordneten Kollektoren 11 eines Kollektormoduls 12 werden von dem durch eine Solarrücklaufleitung 40 eintretenden, in der Regel flüssigen Wärmeträger 46 nacheinander durchströmt, wobei der Wärmeträger die von der Sonne eingestrahlte Wärme aufnimmt und den Kollektormodul 12 durch eine Solarvorlaufleitung 50 wieder verläßt. Die im Modul 12 herrschende Kollektortemperatur wird durch einen Thermofühler 47 abgetastet, der an eine Kollektortemperatur-Signalleitung 48 angeschlossen ist.

Wendet man sich nun wieder Fig. 1 zu, so erkennt man, daß alle Kollektorbatterien 14a bis 14e an eine gemeinsame Solarrücklaufleitung 49 angeschlossen sind, daß aber jede Kollektorbatterie 14a bis 14e eine eigene Solarvorlaufleitung 50a bzw. 50b bzw. 50c bzw. 50d bzw. 50e hat und daß diese Solarvorlaufleitungen 50a bis 50e an der gleichen Mündungsstelle 51 in der Mischkammer 52 eines Mischkopfes 53 münden, von dem aus eine Solarvorlauf-Sammelleitung 54 ausgeht.

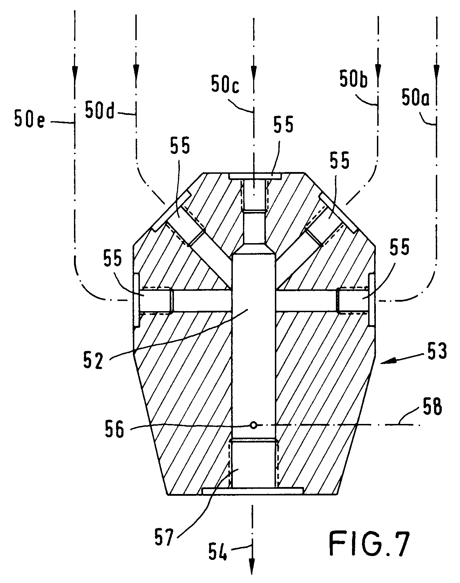

Der Mischkopf 53 ist in Fig. 7 näher dargestellt. Man erkennt, daß die Einlaufstutzen 55 der einzelnen Solarvorlaufleitungen 50a bis 50e über einen Halbkreis verteilt mit gleichem Winkelabstand derart angeordnet sind, daß ihre Achsen in der Mischkammer 52 in einem Punkt zusammentreffen. Die Wärmeträger-Flüssigkeit 46 wird hierdurch in der Mischkammer 52 gründlich vermischt und verwirbelt, wodurch sich auch die unterschiedlichen Temperaturen des Wärmeträgers aus den einzelnen Vorlaufleitungen 50a bis 50e aneinander angleichen und die so gewonnene Durchschnittstemperatur von einem Temperaturmeßfühler 56 für die Solarvorlauftemperatur aufgenommen werden kann, der stromabwärts unmittelbar oberhalb des Auslaufstutzens 57 für die Solarvorlauf-Sammelleitung angeordnet und an eine Solarvorlauftemperatur-Signalleitung 58 angeschlossen ist.

Durch ein erstes Mehrwegeventil 59 gelangt der Wärmeträger in eine Solarumlaufleitung 60, in der eine Solarumlaufpumpe 61 angeordnet ist, welche den Wärmeträger durch ein zweites Mehrwegeventil 62 in die Solarrücklaufleitung 49 drückt, von wo aus er wieder auf die fünf Kollektorbatterien 14a bis 14e verteilt wird und das Kollektorfeld 10 aufs Neue durchläuft, um dort weiter aufgeheizt zu werden. Dieser Kreislauf, mit dem der flüssige Wärmeträger das Kollektorfeld, die Solarvorlaufleitungen 50 und 54, die Solarumlaufleitung 60 und die Solarrücklaufleitung 49 durchläuft, soll im folgenden immer als "Solarkreislauf S" bezeichnet werden, der in Fig. 1 in den durch ausgezogene Linien dargestellten Leitungen durch einfache Pfeile gekennzeichnet ist.

Um die im Solarkreislauf S vom Wärmeträger aufgenommene Wärme einer Nutzung zuzuführen, ist ein Speicherkreislauf für den Wärmeträger vorgesehen, dessen Leitungen in Fig. 1 ebenfalls durch ausgezogene Linien dargestellt sind, die durch Doppelpfeile kenntlich gemacht sind. Der Speicherkreislauf soll im folgenden mit P bezeichnet werden.

Der Speicherkreislauf P ist im ersten Mehrwegeventil 59 mit einer Speichervorlaufleitung 63 an die Solarvorlauf-Sammelleitung 54 angeschlossen, während die Speicherrücklaufleitung 64 in dem zweiten Mehrwegeventil 62 an die Solarrücklaufleitung 49 angeschlossen ist. Zu dem Speicherkreislauf gehören ein erster Wärmespeicher 65 und ein zweiter Wärmespeicher 66, die über eine Verzweigung 67 an die Speichervorlaufleitung 63 und mit ihren Einzelrücklaufleitungen 68 und 69 über Absperrventile 70 und 71 wahlweise einzeln oder beide an die Speicherrücklaufleitung 64 angeschlossen sind. Hierbei drückt eine besondere Speicherumwälzpumpe 72 den Wärmeträger durch den Speicherkreislauf P in den Solarkreislauf S zurück.

Die Wärmespeicher 65 und 66 können jede beliebige Form haben und sind mit geeigneten Wärmetauschern an einen oder mehrere, hier nicht näher dargestellte Verbraucherkreisläufe für Heizung oder Brauchwasser angeschlossen. Jeder Wärmespeicher 65 und 66 hat drei in der Höhe über den Speicherraum 73 verteilt angeordnete Speichertemperaturfühler 74a, 74b, 74c bzw. 75a, 75b und 75c, die mit in strichpunktierten Linien dargestellten Speichertemperatur-Signalleitungen 76 und 77 mit dem Rechner 78 einer Überwachungseinrichtung Ü verbunden sind, an den auch die Solarvorlauftemperatur-Signalleitung 58 angeschlossen ist. Der Rechner 78 vergleicht die ihm zugeführten Ist-Werte der Solarvorlauftemperatur und der Speicherrücklauftemperatur sowie die Differenz dieser Werte mit vorgegebenen Sollwerten und steuert hiernach mit einem elektrischen Steuergerät 79 über in Fig. 1 nur angedeutete Steuerleitungen 80, 81 und 82 die Mehrwegeventile 59 und 62 und die Absperrventile 70 und 71 so, daß eine optimale Erwärmung des Wärmeträgers im Solarkreislauf S und die größtmögliche Wärmespeicherung im Speicherkreislauf P erreicht wird.

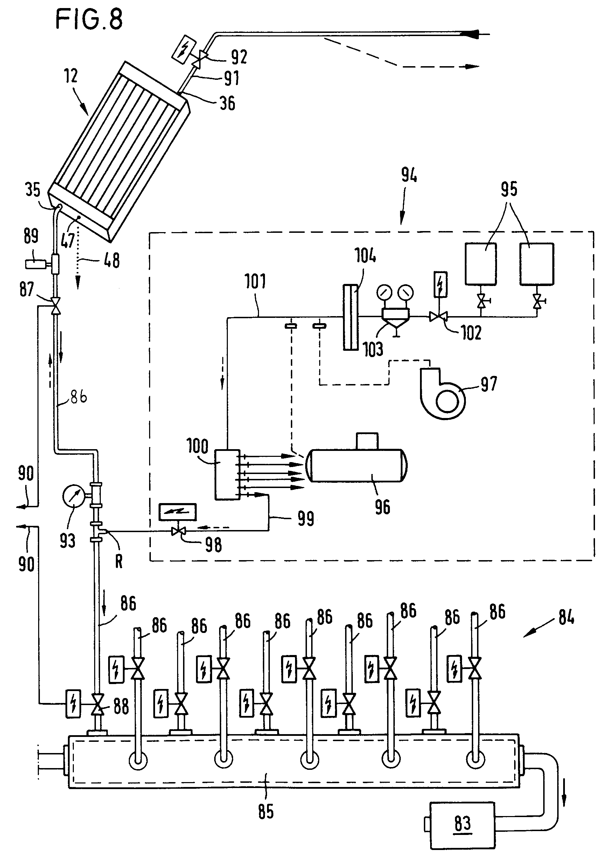

Wie bereits weiter oben dargelegt wurde, ist der Wirkungsgrad des Kollektorfeldes in hohem Maße von den Wärmeverlusten abhängig, die im Solarkreislauf auftreten. Ein wesentlicher Punkt hierbei ist die Ableitung der eingestrahlten Wärme durch die Luft im Inneren der Kollektorgehäuse, welche die Absorberrohre umgibt und einen Teil der Strahlungswärme in die Umgebung zurückführt. Es ist deshalb erforderlich, den die Absorberrohre umgebenden Innenraum der Solarkollektoren zu evakuieren und dafür zu sorgen, daß der erzeugte Unterdruck erhalten bleibt. Zu diesem Zwecke ist bei der Solaranlage nach der Erfindung ein Unterdruckerzeuger 83 vorgesehen, an den die Sonnenkollektoren 11 gruppenweise anschließbar sind. Der Unterdruckerzeuger 83 ist Teil einer Be- und Entlüftungseinrichtung, die in ihrer Gesamtheit mit 84 bezeichnet und in Fig. 8 näher dargestellt ist. Mit dieser Be- und Entlüftungseinrichtung ist es möglich, in den Kollektorgehäusen konzentrierender Sonnenkollektoren nicht nur einen Unterdruck bis zu $10^{-8}$ bar zu erzeugen, sondern auch diesen Unterdruck abzubauen und die Solarkollektoren zwangsweise zu belüften, um bei einer in einem begrenzten Bereich auftretenden Überhitzung eine Kühlung der gefährdeten Kollektoren und ihrer Teile zu erreichen.

Die in Fig. 8 dargestellte Be- und Entlüftungseinrichtung 84 hat ein Vakuumsammelrohr 85, an das alle Kollektormodulen 12 mit jeweils einer eigenen Entlüftungsleitung 86 angeschlossen sind, von denen in Fig. 8 jedoch nur eine Entlüftungsleitung 86 für einen Kollektormodul 12 vollständig dargestellt ist. Jede Entlüftungsleitung 86 hat zwei elektrisch betätigte Ventile 87 und 88, die einzeln oder beide gemeinsam betätigt werden können und von denen das eine Ventil 87 hinter einem Vakuumwächter 89 in der Nähe des Moduls 12 und von denen das andere Ventil 88 am Vakuumsammelrohr 85 angeordnet ist. Jedes Ventil 87 und 88 ist mit einer Steuerleitung 90 an das elektrische Steuergerät 79 (Fig. 1) angeschlossen.

Am Kollektormodul 12 ist diagonal gegenüber vom Anschluß 35 der Entlüftungsleitung 86 am Anschlußstutzen 36 eine Belüftungsleitung 91 angeschlossen, die ein Absperrventil 92 aufweist, das ebenfalls über eine nicht näher dargestellte Steuerleitung mit dem elektrischen Steuergerät verbunden ist.

Wenn der Vakuumwächter 89 oder das Manometer 93 in der Entlüftungsleitung 86 einen nicht mehr ausreichenden Unterdruck im Kollektormodul 12 anzeigt und dieser dem Rechner 78 zugeführte Wert den vorgeschriebenen Sollwert unterschreitet, öffnet das elektrische Steuergerät 79 über die Steuerleitung 90 das Ventil 88, wodurch der betreffende Kollektormodul über das Vakuumsammelrohr an den Unterdruckerzeuger 83 angeschlossen wird, der im Kollektormodul bei geschlossenem Absperrventil 92 das erforderliche Vakuum wieder herstellt. Danach werden die Ventile 87 und 88 wieder geschlossen. Stellt der im Kollektormodul 12 angeordnete Thermofühler 47 für Kollektortemperatur eine Überhitzung des Kollektormoduls fest, so wird dem Rechner 78 über die Kollektortemperatur-Signalleitung 48 des jeweiligen Kollektormoduls ein entsprechendes Signal zugeführt. Das Steuergerät 79 öffnet dann das Absperrventil 92 und läßt durch die Belüftungsleitung 91 Luft in die Kollektorgehäuse 15 und in die Verbindungsrohre 21 des Kollektormoduls 12 eintreten. Die eingeströmte Luft in den Kollektorgehäusen ermöglicht nun eine Wärmeableitung an das Modulgehäuse 13 und an die Umgebung des Kollektorfeldes 10.

Ist die Abkühlung des Kollektormoduls durch diese einfache Belüftung nicht ausreichend, öffnet das Steuergerät 79 auch die Ventile 87 und 88, so daß das Innere der Kollektorgehäuse 15 und ihrer Verbindungsrohre 21 durch die Entlüftungsleitung 86 bei offenem Absperrventil 92 an den Unterdruckerzeuger 83 angeschlossen wird. Hierdurch wird im Inneren des Kollektormoduls eine Luftströmung erzeugt, welche die Absorberrohre umspült und die Glasröhren und alle anderen Teile des Moduls kühlt und die dort vorhandene Wärme durch Konvektion abführt.

Man erkennt, daß durch Belüftung und gegebenenfalls Erzeugung einer Luftströmung im Inneren der Sonnenkollektoren und ihrer Verbindungsrohre eine sehr rasche Abkühlung erreicht werden kann, die eine örtliche Überhitzung schnell und einfach beseitigt. Da diese Kühlung gezielt nur an denjenigen Stellen des Kollektorfeldes angewandt wird, wo eine Überhitzung auftritt, wird der Wirkungsgrad der Gesamtanlage hierdurch nur wenig beeinträchtigt.

Um jedoch auch noch diejenige Wärme auszunutzen, die bei Überhitzung eines Teiles der Anlage abgeführt werden muß, kann die Belüftung der Kollektormoduln auch über eine zusätzliche Belüftungsanlage 94 durchgeführt werden, die in Fig. 8 in der strichierten Umrandung dargestellt ist.

Die dargestellte Belüftungsanlage 94 kann wahlweise mit in Flaschen vorgehaltenem Druckgas 95, mit einem Kompressor 96 oder einem Ventilator 97 betrieben werden. Bei Überhitzung eines Kollektormoduls, die von dem Thermofühler 47 der Überwachungseinrichtung dem Rechner 78 gemeldet wird, öffnet das elektrische Steuergerät 79 das elektrisch betätigte Ventil 87 in der Leitung 86 und das Belüftungsventil 98 in der zu diesem Modul gehörenden Belüftungsleitung 99, die von dem Verteiler 100 ausgeht, dem durch die Hauptbelüftungsleitung 101 Belüftungsluft von dem Kompressor 96 oder dem Ventilator 97 zugeleitet wird. Wird Belüftungsluft oder ein anderes Gas zur Belüftung des Moduls aus Druckgasflaschen 95 zugeführt, so muß zusätzlich ein Absperrventil 102 betätigt werden, und es ist erforderlich, dieses Gas auf den erforderlichen geringeren Druck von etwa 0,5 bar mit einem Druckminderer 103 herabzusetzen. Außerdem ist es zweckmäßig, das Gas in einem Trockner 104 zu trocknen oder ggf. zu reinigen, damit die Glasröhren der Kollektoren nicht verschmutzt werden oder Feuchtigkeit auf ihrer Innenseite kondensieren kann.

Die Belüftungsluft oder das Belüftungsgas strömt dann in Richtung der strichierten Pfeile durch die Leitung 86, den Kollektormodul 12 und die Leitung 91 bei geöffentem Ventil 92 ins Freie. Es ist jedoch auch möglich, diese Belüftungsluft oder dieses Belüftungsgas, welches ja in dem Kollektormodul Wärme aufnimmt, zur zusätzlichen Erwärmung von Brauch- oder Heizungswasser zu verwenden oder durch den Wärmespeicher zu leiten oder mit einer Luft/Luft-Wärmepumpe auf eine höhere Temperatur zu transformieren, die dann anderweitig ausgenutzt werden kann.

Die zuvor beschriebene Überlastsicherung, bei der der Unterdruck in den Solarkollektoren beseitigt wird, wenn eine bestimmte Höchsttemperatur überschritten wird, kann noch effektiver gestaltet werden, wenn der Speicherkreislauf P zugeschaltet wird, soweit hier die Wärmeträgertemperatur niedriger ist als in den Kollektormoduln 12. Eine weitere wirksame Maßnahme ist es, wenn bei Überschreiten der höchstzulässigen Temperatur im Beharrungszustand oder Stillstand eines Moduls des Kollektorfeldes die Strömungsgeschwindigkeit des Wärmeträgers im Solarkreislauf S erhöht oder der Speicherkreislauf T zugeschaltet wird. Durch Erhöhung der Fließgeschwindigkeit strömt der Wärmeträger so rasch durch das Kollektorfeld, daß er praktisch keine Möglichkeit mehr hat, Strahlungswärme aufzunehmen. Werden die Absorberrohre zusätzlich durch einen Luftstrom im Inneren der Kollektorgehäuse gekühlt, kann die Temperatur des Wärmeträgers sehr rasch gesenkt und die gesamte Anlage wieder in den zulässigen Temperaturbereich gebracht werden.

Die Belüftung der Kollektorgehäuse des Kollektorfeldes und die damit mögliche Kühlung des die Absorberrohre durchströmenden Wärmeträgers kann auch als Überlastsicherung für die Wärmespeicher benutzt werden. Wenn beispielsweise die Temperatur in einem Wärmespeicher 65 oder 66 eine vorgegebene Maximaltemperatur von etwa 150° C übersteigt, wird der Speicherkreislauf T an den Solarkreislauf S angeschlossen, und die Kollektormoduln werden, wie zuvor beschrieben, belüftet. Infolge der Beseitigung des Unterdruckes in den Kollektoren und der hierdurch fehlenden Isolierung der Absorberrohre wird ein Teil der eingestrahlten Wärmeenergie abgeführt, so daß die Temperatur des Wärmeträgers sinkt und dieser bei seinem Durchlauf durch die Wärmespeicher 65 und 66 deren Höchsttemperatur herabsetzt.

Die Erfindung ist nicht auf das dargestellte und beschriebene Ausführungsbeispiel beschränkt, sondern es sind mehrere Änderungen und Ergänzungen möglich, ohne den Rahmen der Erfindung zu verlassen. Beispielsweise ist es möglich, die zu überwachende Höchsttemperatur der Sonnenkollektoren nicht in einem Absorberrohr, sondern in einem anderen Teil des Kollektors, des Kollektormoduls oder des Modulgehäuses abzutasten, wenn eine unzulässige Temperaturerhöhung dort als besonders kritisch angesehen wird. Die Belüftung der Kollektoren kann auch bei solchen Solaranlagen angewendet werden, die ohne Wärmespeicher arbeiten und den Wärmeinhalt des Wärmeträgers unmittelbar auf einen Verbraucher übertragen. Die bei der Erfindung im Rechner und Steuerteil untergebrachte Überlastsicherung kann auch anders ausgebildet sein. Schließlich ist es auch möglich, den Wärmeträgerstrom etwas anders zu führen, ohne daß der Rahmen der Erfindung hierdurch überschritten wird.

**Patentansprüche**

1. Solaranlage mit mindestens einem Wärmespeicher (65,66) und einem Feld (10) konzentrierender Sonnenkollektoren (11), deren ihre Absorberrohre (17) umschließenden Innenräume (33) miteinander verbunden und an einen Unterdruckerzeuger (83) angeschlossen sind, **dadurch gekennzeichnet,** daß die Innenräume (33) der Kollektoren (11) einzeln oder in Gruppen an eine mit dem Unterdruckerzeuger (83) verbundene Be- und Entlüftungseinrichtung (84) mit Absperrorganen (87, 88) angeschlossen sind, die von einer Überwachungseinrichtung (78, 79) betätigt werden, die in Abhängigkeit von der Temperatur des Wärmeträgers (46) in den Kollektoren (11) und/oder in einem Wärmespeicher (65, 66) gesteuert wird.

2. Anlage nach Anspruch 1, **dadurch gekennzeichnet,** daß mehrere Wärmespeicher (65, 66) vorgesehen sind, die an einen Verbraucherkreislauf angeschlossen sind und wahlweise in den Speicherkreislauf (P) einschaltbar sind.

3. Anlage nach Anspruch 1 oder 2, **dadurch ge-**

kennzeichnet, daß jeweils mehrere Kollektoren (11) zu einem Kollektormodul (12) zusammengefaßt sind und daß jeder Kollektormodul (12) einen Thermofühler (47) aufweist und einzeln an die Be- und Entlüftungseinrichtung (84) angeschlossen ist.

4. Anlage nach einem der Ansprüche 1 bis 3, **dadurch gekennzeichnet,** daß parallel geschaltete Kollektoren (11) oder Kollektorbatterien (14) oder -moduln (12) des Kollektorfeldes (10) jeweils eine eigene Solarvorlaufleitung (50a bis 50e) haben, die alle an der gleichen Mündungsstelle (51) in eine Solarvorlauf-Sammelleitung (54) münden, in der der Temperaturmeßfühler (56) für die Solarvorlauftemperatur des Kollektorfeldes (10) angeordnet ist.

5. Anlage nach Anspruch 4, **dadurch gekennzeichnet,** daß die Mündungsstelle (51) aller Solarvorlaufleitungen (50a bis 50e) sich in der Mischkammer (52) eines Mischkopfes (53) befindet, in dem die einzelnen Solarvorlaufströme verwirbelt und vermischt werden und an den die Solarvorlauf-Sammelleitung(54) angeschlossen ist.

6. Anlage nach einem der Ansprüche 1 bis 5, **dadurch gekennzeichnet,** daß der Mischkopf (53) für jede angeschlossene Solarvorlaufleitung (50a bis 50e) einen Einlaufstutzen (55) aufweist, wobei die Einlaufstutzen (55) über einen Halbkreis verteilt mit gleichem Winkelabstand angeordnet sind und sich ihre Achsen in einem Punkt schneiden, der auf der Mittelachse eines Einlaufstutzens und stromauf des Temperaturmeßfühlers (56) für die Solarvorlauftemperatur angeordnet ist.

7. Anlage nach einem der Ansprüche 1 bis 6, **dadurch gekennzeichnet,** daß jeder Wärmespeicher (65, 66) mehrere Temperaturfühler (74 bzw. 75) für den Speicherrücklauf aufweist, die über den vom Wärmeträger (46) durchflossenen Speicherraum verteilt angeordnet sind.

8. Anlage nach einem der Ansprüche 1 bis 7, **gekennzeichnet durch** mindestens je einen Solarkreislauf (S) und einen Wärmespeicherkreislauf (P), von denen jeder eine eigene Umwälzpumpe (61 bzw. 72) aufweist und deren Vorlaufleitungen (60, 63) und deren Rücklaufleitungen (49, 64) durch Mehrwegeventile (59, 62) verbunden sind, die von der Steuereinrichtung (78, 79) gesteuert werden.

9. Anlage nach einem der Ansprüche 1 bis 8, **dadurch gekennzeichnet,** daß die Gehäuse (15) der einzelnen Kollektoren (11) eines Moduls (12) im wesentlichen von langgestreckten Röhren (16) aus Glas oder mindestens im Bereich ihrer Abdeckungaus glasklarem Kunststoff gebildet werden und in der Höhe versetzt nebeneinander angeordnet sind.

10. Anlage nach Anspruch 9, **dadurch gekennzeichnet,** daß die nebeneinanderliegenden Kollektoren (11) eines Moduls (12) derart in der Höhe gegeneinander versetzt sind, daß ihre Längsachsen (37, 38) Erzeugende eines parabolischen Teilzylinders (41) sind.

11. Anlage nach einem der Ansprüche 1 bis 10, **dadurch gekennzeichnet,** daß die Kollektoren (11) eines Moduls (12) untereinander und mit sie an ihren Enden(16a, 16b) verbindenden Verbindungsrohren (21) durch druckdichte Verschraubungen (24) verbunden sind.

12. Anlage nach einem der Ansprüche 1 bis 11, **dadurch gekennzeichnet,** daß jede Verschraubung (24) für eine Kollektorröhre (16) einen Muffenteil (23) mit Innengewinde (25) und einen Hülsenteil (26) mit Außengewinde (27) und einen Elastomer-Dichtring (28) aufweist und daß der Innenumfang von Hülsenteil (26) und Dichtring (28) dem Außenumfang (U) der Kollektorröhre (16) angepaßt ist.

13. Anlage nach einem der Ansprüche 1 bis 12, **dadurch gekennzeichnet,** daß die Dicke (d) des Dichtringes (28) mindestens auf einem Teil seiner Länge (1) der Breite (b) des Ringspaltes (30) zwischen dem Innenumfang des Muffenteils (23) und dem Außenumfang (U) der Kollektorröhre (16) entspricht und daß der Dichtring (28) nur mit einem Teil seiner Länge (1) das Ende (16a) der Kollektorröhre (16) umfaßt.

14. Anlage nach einem der Ansprüche 1 bis 13, **dadurch gekennzeichnet,** daß der Hülsenteil (26) der Verschraubung (24) an seinem freien Ende auf dem Innenumfang eine umlaufende Nute (105) und einen darin angeordneten O-Ring (106) aus Elastomer aufweist.

15. Anlage nach einem der Ansprüche 1 bis 14, **dadurch gekennzeichnet,** daß mehrere, in ihrer Längsrichtung hintereinander angeordnete und durch Längsverbindungsmuffen (32) miteinander verbundene Kollektoren (11) einen Polygonzug bilden, der einer gekrümmten Linie, insbesondere einem Kreisbogen folgt.

16. Verfahren zum Betreiben einer Solaranlage nach einem der Ansprüche 1 bis 15, **dadurch**

**gekennzeichnet,** daß bei Überschreiten der höchstzulässigen Temperatur in einem Kollektor (11) oder in einem Wärmespeicher (65, 66) der Unterdruck mindestens in dem betroffenen Kollektor (11) und gegebenenfalls seinen Verbindungsrohren (21) beseitigt wird.

17. Verfahren nach Anspruch 16, **dadurch gekennzeichnet,** daß im Inneren der Kollektoren (11) und Verbindungsrohre (21) ein Luftstrom erzeugt wird.

18. Verfahren nach Anspruch 16, **dadurch gekennzeichnet,** daß bei Überschreiten der höchstzulässigen Temperatur in einem Kollektormodul (12) der Wärmespeicherkreislauf (P) zugeschaltet wird, soweit die Wärmeträgertemperatur hier niedriger ist als in dem Kollektormodul (12).

19. Verfahren nach Anspruch 16 oder 18, **dadurch gekennzeichnet,** daß bei Überschreiten der höchstzulässigen Temperatur im Beharrungszustand oder Stillstand eines Moduls (12) des Kollektorfeldes (10) die Strömungsgeschwindigkeit des Wärmeträgers (46) im Solarkreislauf (S) erhöht und/oder der Wärmespeicherkreislauf (P) zugeschaltet wird, soweit die Temperatur des Wärmeträgers (46) hier niedriger ist.

FIG.1

EP 0 516 067 A2

FIG.2

FIG.4

FIG.3

# FIG.5

# FIG.6

FIG.7

FIG.8